# EUROPÄISCHE PATENTANMELDUNG

(11) **EP 1 460 728 A1**
(43) Veröffentlichungstag der Anmeldung: **22.09.2004**
(21) Anmeldenummer: 04005246.6
(22) Anmeldetag: 05.03.2004
(51) Int. Cl.: H01R 13/59, H01R 13/52, H01R 13/516, H01R 13/58

(54) **Kabelverschraubung**

(30) Priorität: 15.03.2003 DE 10311473
(71) Anmelder: Harting Electric GmbH & Co. KG, 32339 Espelkamp (DE)
(72) Erfinder: Nass, Andreas, 31606 Warmsen (DE); Schmidt, Martin, 32312 Lübbecke (DE)

(57) **Zusammenfassung**

Für den Einsatz eines bereits mit einem Steckereinsatz (16) vorkonfektionierten elektrischen Kabels (17) in ein Steckergehäuse (10,10') mit einem Kabelstutzen (11,11'), wird vorgeschlagen, dass Steckergehäuse aus zwei verbindbaren Gehäusehälften zusammenzusetzen, in das der Steckereinsatz mit dem bereits angeschlossenen Kabel eingelegt wird.
Für die Zugentlastung und zur Abdichtung des aus dem Kabelstutzen herausragenden Kabels sind durch einen Schlitz unterbrochene Dichtelemente (18,19) sowie zwei mittig längsgeteilte aber verbindbare Schraubelemente (31,32) vorgesehen, die, um das Kabel herumgelegt und zusammenfügbar, eine Kabelverschraubung bilden.

## Beschreibung

Die Erfindung betrifft eine Kabelverschraubung zum Aufschrauben auf einen Kabelstutzen an einem Steckverbindergehäuse, wobei das Steckverbindergehäuse das aus zwei mittig, längsgeteilten und verbindbaren Halbschalen besteht, und wobei die Trennebene mittig durch den Kabelstutzen verläuft.

Eine derartige, aus einem zusammenfügbaren Schraubelement und geschlitzten Dichtelementen bestehende Kabelverschraubung wird benötigt, um bereits vorkonfektionierte Kabel, die mit Steckereinsätzen oder Steckanschlüssen bereits fest verbunden sind, in einem Kabelstutzen eines aus zwei Gehäusehalbschalen bestehenden Steckverbindergehäuse zu befestigen. Dabei werden das teilbare Schraubelement und die geschlitzten Dichtelemente um das Kabel herum montiert und in den Kabelstutzen eingeschraubt.

Bisher wurden Steckverbindergehäuse mit vorkonfektionierten elektrischen Kabeln an denen die Steckereinsätze bereits montiert sind, im Inneren von geschützten Systemen, wie in Schaltschränken verwendet.
Hierbei übernimmt der Schaltschrank den Schutz für die Industrieumgebung, so dass das Steckverbindergehäuse nur die Funktion der Verriegelung mit der fest angebauten Steckerseite sowie als Berührungsschutz zu spannungsführenden Teilen und zur Kabelzugentlastung erfüllen muss.
Für Anwendungen außerhalb geschützter Systeme sind Vorkehrungen zu treffen, ein Steckverbindergehäuse entsprechend stabil und sicher gegen Umwelteinflüssen zu gestalten.

Der Erfindung liegt daher die Aufgabe zugrunde, ein vorkonfektioniertes und bereits mit Steckanschlüssen versehenes elektrisches Kabel in ein aus zwei Halbschalen bestehendes Steckverbindergehäuse einzufügen, und entsprechende Verschraubungs- und Dichtelemente vorzusehen, die auf ein bereits montiertes Kabel aufsetzbar sind.

Diese Aufgabe wird dadurch gelöst, dass die Kabelverschraubung aus einem Schraubelement besteht, das aus zwei zusammenfügbaren Teilelementen gebildeten ist, an denen ein Außengewinde vorgesehen ist, wobei die Teilelemente ein in den Kabelstutzen eingeführtes Kabel umschließen, dass an dem Kabelstutzen ein Gewinde vorgesehen ist, in das das Schraubelement einschraubbar ist, und dass an dem Kabelstutzen eine Schulter ausgebildet ist, an der ein das Kabel umgreifendes, geschlitztes Dichtelement zur Anlage gelangt, das beim Einschrauben des Schraubelementes in den Kabelstutzen zusammengedrückt wird.

Vorteilhafte Ausgestaltungen der Erfindung sind in den Ansprüchen 2 - 8 angegeben.

Die mit der Erfindung erzielten Vorteile bestehen insbesondere darin, dass ein bereits vorkonfektioniertes, mit einem Steckereinsatz oder einer Steckvorrichtung versehenes elektrisches Kabel in ein aus zwei Halbschalen gebildetes Steckverbindergehäuse einsetzbar ist.
Das zur Befestigung des Kabels erforderliche Schraubelement - auch unter der Bezeichnung Druckschraube bekannt - das in dem Kabelstutzen eingeschraubt wird sowie ein dazu erforderliches Dichtelement, das beidseitig von Druckscheiben umgeben ist, sind vorteilhafterweise mindestens an einer Stelle durch einen Schlitz unterbrochen und werden an diesen Trennstellen um dass Kabel herumgelegt und wieder zusammengefügt.
Dabei sind unterschiedliche Verbindungsformen für den Zusammenhalt der beiden Teilelemente des Schraubelementes vorgesehen, die hier als Schiebeverbindungen in einer formschlüssigen Verbindung mittels der heutigen Spritztechnik relativ leicht zu realisieren sind.
Wobei vorteilhafterweise als Grundform eine Feder-Nut-Verbindung gewählt wurde.

Alle erfindungsgemäßen Schraubelemente weisen eine im Wesentlichen gestauchte T-Form auf, deren oberer Teil als Sechskant ausgebildet ist, so dass bereits mit einer Hand relativ hohe Anzugskräfte übertragen werden können. Der unterere Teil des Schraubelementes ist mit einem Außengewinde versehen, das in dem Innengewinde des Kabelstutzens eines fertig montierten Steckverbindergehäuses eingeschraubt wird.

Ein Ausführungsbeispiel der Erfindung ist in der Zeichnung dargestellt und wird im folgenden näher erläutert. Es zeigen:
- Fig.1: eine offene Hälfte einer Gehäusehalbschale,
- Fig.2: zwei Hälften eines Schraubelementes mit Zapfen,
- Fig.3: zwei Hälften eines Schraubelementes mit Schwalbenschwanz,
- Fig.4: zwei mittels Filmscharnier verbundene Hälften,
- Fig.5: zwei Hälften eines Schraubelements mit einer radialen Führung, und
- Fig.6: Montageansicht eines Steckverbinders mit der Kabelverschraubung.

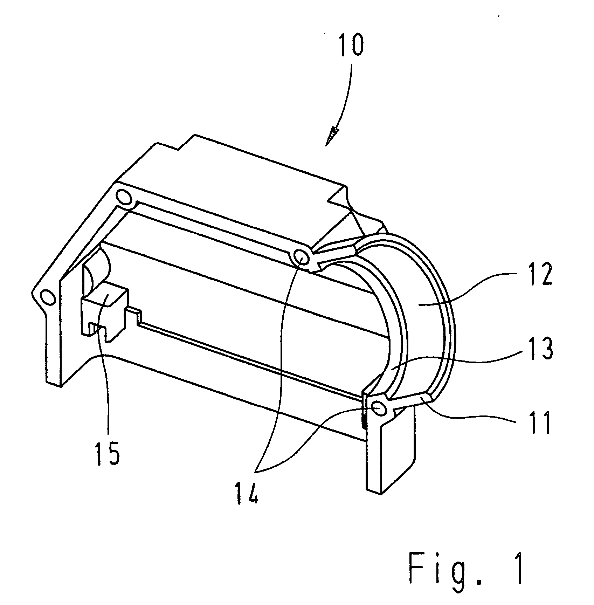

In der Fig.1 ist eine Gehäusehalbschale 10 dargestellt, die mit einer zweiten Gehäusehalbschale verbunden ein Steckverbindergehäuse ergibt, in dem ein Steckereinsatz 16 zum Anschluss elektrischer Leitungen einsetzbar ist. Zwei solcher Gehäusehalbschalen werden mittels Schraubverbindungen zusammengehalten, wofür in den Eckbereichen Bohrungen 14 vorgesehen sind.
Die Gehäusehalbschale 10 weist einen halbierten Kragen 11 auf, der zusammen mit einer zweiten Gehäusehalbschale einen Kabelstutzen bildet. Auf der Innenseite des Kabelstutzens ist ein Innengewinde 12 vorgesehen. Weiterhin ist am Abschluss des Kragens zum Gehäuseinneren eine Schulter 13 vorgesehen.

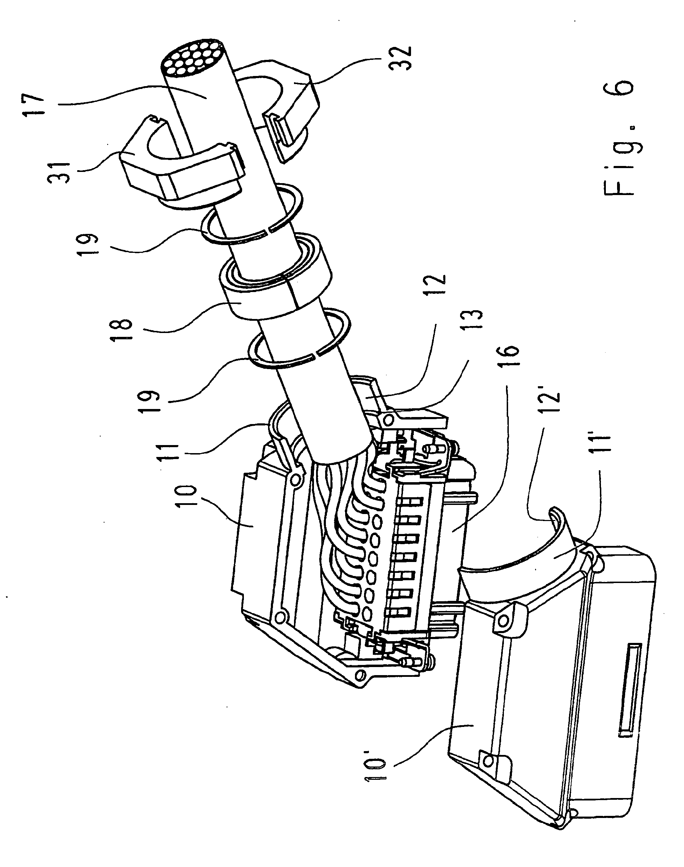

Für die Befestigung eines Steckereinsatzes 16 sind in den innenliegenden Eckbereichen der Gehäusehalbschale sind schlitzartige Halterungen 15 vorgesehen, in die an dem Steckereinsatz 16 montierte Blechwinkel eingesetzt werden. (siehe auch Fig. 6)

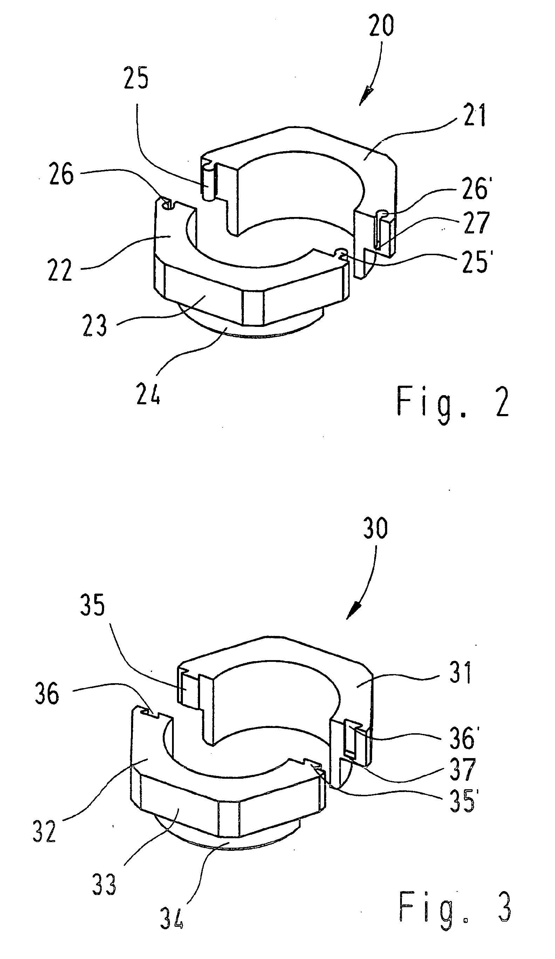

In der Fig. 2 ist ein Schraubelement 20 dargestellt, das aus zwei nahezu symmetrisch geformten Teilelementen 21, 22 besteht. Die Teilelemente sind mittig geteilt und weisen eine im Wesentlichen gestauchte T-Form auf, wobei der obere Teil des zusammengefügten Schraubelementes als Sechskant 23 ausgebildet ist und an dem unteren Teil ein Außengewinde 24 vorgesehen ist.
An der Trennebene der Teilelemente ist jeweils eine formschlüssige Schiebeverbindung vorgesehen, die jeweils einen axial ausgerichteten Zapfen 25, 25' und eine entsprechende Nut 26, 26' zur Aufnahme des Zapfens aufweist. Zur Montage des Schraubelementes werden die beiden Teilelemente mittels Zapfen 25 und Nut 26, sowie Zapfen 25' und Nut 26' axial zusammengeschoben, wobei der etwas verkürzte Zapfen 25' gegen eine Begrenzung 27 unterhalb der Nut 26' anschlägt, so dass ein Durchschieben der beiden Teilelemente verhindert wird.

In der Fig. 3 ist als Variante zu der Fig. 2 ein Schraubelement 30 gezeigt, bei dem die formschlüssige Verbindung der beiden Teilelemente 31, 32 als Schwalbenschwanzführung ausgebildet ist, wobei ein Zapfen 35, 35' in eine Ausnehmung 36, 36' axial einschiebbar ist, und wobei der etwas verkürzte Zapfen 35' gegen eine Begrenzung 37 unterhalb der Nut 36' anschlägt.
Der obere Teil des Schraubelementes ist als Sechskant 33 ausgebildet und der untere Teil mit einem Außengewinde 34 versehen.

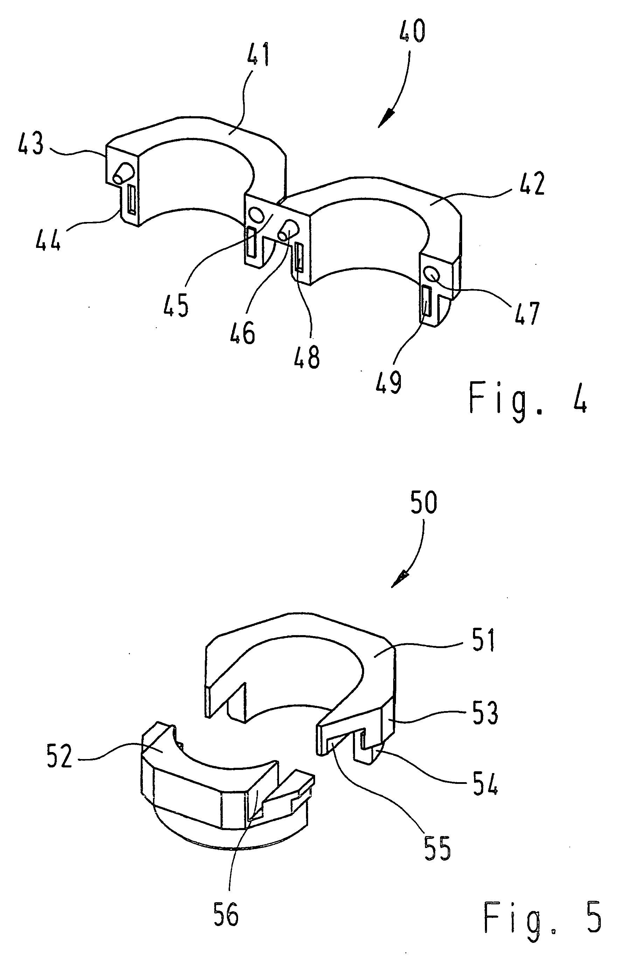

Die Fig. 4 zeigt ein Schraubelement 40, das aus zwei Teilelementen 41, 42 gebildet ist und im geöffneten Zustand mittels eines Filmscharnieres 45 zusammmengehalten wird, ansonsten aber symmetrisch ausgebildet ist. Wobei der obere Teil mit einem Sechskant 43 und der untere Teil mit einem Außengewinde 44 versehen ist.

An der Trennebene der Teilelemente sind Stifte 46 und Vertiefungen 47 für die Stifte vorgesehen, die die Passgenauigkeit des Schraubelementes beim Zusammenfügen der Hälften gewährleisten.
Weiterhin sind Verrastungsmittel 48, 49 für den Zusammenhalt der beiden Teilelemente vorgesehen.
Die Fig. 5 zeigt die Darstellung eines Schraubelementes 50, das aus unterschiedlich geformten Teilelementen 51, 52 zusammengefügt ist. Dabei ist der obere Teil als Sechskant 53 ausgeführt und der untere Teil mit einem Außengewinde 54 versehen.
Dieses Schraubelement wird mittels einer radialen Verschiebung der beiden Teilelemente 51, 52 zusammengefügt, wobei im Sechskantbereich 53 des Teilelementes 51 jeweils eine Führungsschiene 55 ausgebildet ist, die in eine entsprechend geformte Längsnut 56 des Teilelementes 52 einschiebbar ist.
Dabei ist eine im Prinzip beliebig wählbare Kontur vorsehbar, die ein lineares Zusammenschieben der beiden Teilelemente in einer Ebene gewährleistet. Hier ist eine Rechteckform vorgesehen, bei der eine Ausnehmung an der einen Hälfte mit einer entsprechenden Gegenform an der anderen Hälfte kombiniert sind.

Um ein elektrisches Kabel in dem Kabelstutzen korrekt zu halten und das Gehäuseinnere gleichzeitig gegen Umwelteinflüsse zu schützen, muss das Kabel von einem Dichtelement umgeben sein, das mittels des Schraubelementes fest in dem Kabelstutzen verschraubt werden kann, so dass das Dichtelement neben dem Abdichten auch gleichzeitig als Zugentlastung dient.
Dabei sind beidseitig des Dichtelementes anliegenden Druckscheiben vorgesehen, die ein Gleiten der unterschiedlichen Materialien beim Verschrauben des Dichtelementes durch das Schraubelement ermöglicht.

In der Fig. 7 ist in einer auseinandergezogenen Darstellung die Montage eines Steckergehäuses mit einem vormontierten Kabel gezeigt.

Dabei ist der Steckereinsatz 16 zusammen mit dem elektrischen Kabel 17 bereits in der Halbschale 10 eingelegt, die abschließend mit einer zweiten Halbschale 10' zusammengefügt wird.
Weiterhin werden jeweils in der Reihenfolge wie aus der Fig. 7 ersichtlich, ein Dichtring 18 mit zwei Druckscheiben 19 auf das Kabel 17 aufgestülpt. Da diese ringförmigen Teile an einer Stelle unterbrochen sind, werden sie durch ein Auseinanderbiegen um das Kabel herumgelegt.
Dann werden die Scheiben in den aus den beiden Halbkragen 11, 11' gebildeten Kabelstutzen des Steckverbindergehäuses eingeschoben, bis die erste Scheibe 19 an der Schulter 13 anliegt. Anschließend wird - in diesem Fall das Schraubelement 30 mit den beiden Teilelementen 31, 32 ebenfalls um das Kabel herumgelegt, zusammengefügt und in den Kabelstutzen eingeschraubt, bis der Dichtring 18 das Kabel 17 fest umschließt.

## Patentansprüche

1. Kabelverschraubung zum Aufschrauben auf einen Kabelstutzen an einem Steckverbindergehäuse, wobei das Steckverbindergehäuse aus zwei mittig, längsgeteilten und verbindbaren Halbschalen (10, 10') besteht, und wobei die Trennebene mittig durch den Kabelstutzen (11,11') verläuft, **dadurch gekennzeichnet,**
**dass** die Kabelverschraubung aus einem Schraubelement (20, 30, 40, 50) besteht, das aus zwei zusammenfügbaren Teilelementen gebildeten ist, an denen ein Außengewinde (24, 34, 44, 54) vorgesehen ist, wobei die Teilelemente ein in den Kabelstutzen eingeführtes Kabel (17) umschließen,
**dass** an dem Kabelstutzen (11,11') ein Gewinde (12, 12') vorgesehen ist, in das das Schraubelement einschraubbar ist, und
**dass** an dem Kabelstutzen (11, 11') eine Schulter (13) ausgebildet ist, an der ein das Kabel (17) umgreifendes, geschlitztes Dichtelement (18) zur Anlage gelangt, das beim Einschrauben des Schraubelementes in den Kabelstutzen (11, 11') zusammengedrückt wird.

2. Kabelverschraubung nach Anspruch 1, **dadurch gekennzeichnet, dass** bei dem Schraubelement (20) an der Trennebene der Teilelemente (21, 22) jeweils gegenüberliegend und in Schraubrichtung ausgerichtet, angeformte Rundzapfen (25, 25') vorgesehen sind, die in entsprechende Ausnehmung (26, 26') eingreifen, und wobei die Rundzapfen an einer Begrenzung (27) anschlagen.

3. Kabelverschraubung nach Anspruch 1, **dadurch gekennzeichnet,**
**dass** bei dem Schraubelement (30) an der Trennebene der Teilelemente (31, 32) jeweils, gegenüberliegend in Schraubrichtung ausgerichtet, eine Schwalbenschwanzführung mit einem Zapfen (35, 35') und einer Nut (36, 36') vorgesehen ist, und wobei der Zapfen (35') an einer Begrenzung (37) anschlägt.

4. Kabelverschraubung nach Anspruch 1, **dadurch gekennzeichnet,**
**dass** bei dem Schraubelement (40) die Teilelemente (41, 42) mittels eines klappbaren Scharnieres (45) zusammengehalten sind, wobei jeweils gegenüberliegend an der Trennebene Zapfen (46) vorgesehen sind, die in Vertiefungen 47 eingreifen, und wobei Verrastungsmittel (48, 49) für den Zusammenhalt der Schraubelemente vorgesehen sind.

5. Kabelverschraubung nach Anspruch 1, **dadurch gekennzeichnet,**
**dass** bei dem Schraubelement (50) die Teilelemente (51, 52) mittels formschlüssiger Führungsmittel (55, 56) in radialer Richtung zusammenschiebbar sind.

6. Kabelverschraubung nach Anspruch 1, **dadurch gekennzeichnet,**
**dass** das Dichtelement (18) als flexibler, geschlitzter Ring ausgebildet ist.

7. Kabelverschraubung nach Anspruch 1, **dadurch gekennzeichnet,**
**dass** beidseitig des Dichtelementes (18) als geschlitzte Ringe ausgeführte Druckscheiben (19) vorgesehen sind.

8. Kabelverschraubung nach einem oder mehreren der vorstehenden Ansprüche, **dadurch gekennzeichnet,**
**dass** die Schraubelemente (20,30,40,50) eine Sechskantform aufweisen.
